# EUROPEAN PATENT APPLICATION

(11) **EP 1 300 318 A2**
(43) Date of publication of application: **09.04.2003**
(21) Application number: 02380097.2
(22) Date of filing: 13.05.2002
(51) Int. Cl.: B62D 3/00

(54) **Spring steering device for children's vehicles**

(30) Priority: 08.10.2001 ES 200102461 U
(71) Applicant: Rodriguez Martinez, S.C., 03440 Ibi, Alicante (ES)
(72) Inventor: Rodriguez Ferre, José Manuel, 03440 Ibi (Alicante) (ES)
(74) Representative: Canadell-Isern, Roberto

(57) **Abstract**

STEERING SPRING FOR CHILDREN'S VEHICLES made up of a mechanism composed of a steering gear (3), a pinion of the steering wheel (4) and an intermediate gear (5), inter-assembled in a simple way, that are housed in a box formed by a base (2) and a lid (1) and arranged in such a way that reduction of the steering wheel revolutions of a child's vehicle is permitted and transferred to its directional axle. Thus, when this makes two complete turns, the front wheels only turn an eighth, giving the vehicle a sensation of realism when driving it.

## Description

The purpose of this invention is a steering spring for children's vehicles that provides for the function for which it is intended various advantages to be detailed later on, apart from others inherent to its organization and constitution.

More specifically, the invention has designed a mechanism based on gears housed inside a box which, coupled to the steering wheel of a child's vehicle on one side and to its directional axle on the other, operate in a way that permits said steering wheel to be turned various times and only transmit a short turn to the direction wheels of the vehicle, giving a sensation of realism when driving.

### HISTORY

At present there are numerous and diverse revolutions reducing and/or increasing mechanisms based on gears on the market, which are used for different purposes. On the other hand, there is a multitude of children's vehicles on the market the steering of which is direct transmission resulting in the turning possibility of the steering wheel being very limited.

### DESCRIPTION OF THE INVENTION

The steering spring purpose of this patent consists of a mechanism composed of various gears and pinions, inter-assembled in a simple way, housed in a box and provided with two axles which, coupled on one side to the axis that joins the front wheels (directional) of a child's vehicle and on the other to the steering wheel axis, permits reducing its revolutions so that when this is made to turn completely two times the front wheels simply turn an eighth, thus giving the vehicle a sensation of realism when driving it, comparable to a real vehicle.

In order to complement the description which follows and to help with a better understanding of its characteristics, this description includes a set of drawings in which the most significant details of the invention are represented in an illustrative but not limiting way.

### BRIEG DESCRIPTION OF THE DRAWINGS

Figure 1 shows a perspective view of the lid.
Figures 2 and 5 show two floor views of the internal and external part of the lid, respectively.
Figures 3 and 4 show two section views of the lid in drawings B-B' and A-A indicated in figures 2 and 5, respectively.
Figure 6 shows a perspective view of the base of the box.
Figures 7 and 10 shows two floor views of the internal and external part of the base of the box, respectively.
Figures 8 and 9 show twp section views of the base of the box in drawings D-D' and C-C' indicated in figure 7.
Figures 11 and 13 show two floor views of the steering gears.
Figure 12 shows a longitudinal section view of the steering gears.
Figures 14 and 15 show two longitudinal and floor views, respectively, of the steering pinion.
Figures 16 and 17 show two floor and longitudinal section views, respectively, of the intermediate gears.

### DESCRIPTION OF A PREFERRED PERFORMANCE

In view of the figures commented above and in accordance with the numbering used, a preferred performance, although not limitative of the invention, can be seen. This consists of a mechanism composed of steering gears -3-, a steering wheel pinion -4- and intermediate gears -5-, housed in a box formed by a lid -1- and a base -2-, arranged in such a way that reduction of the steering wheel revolutions of a child' vehicle is permitted and are transferred to its directional axle.

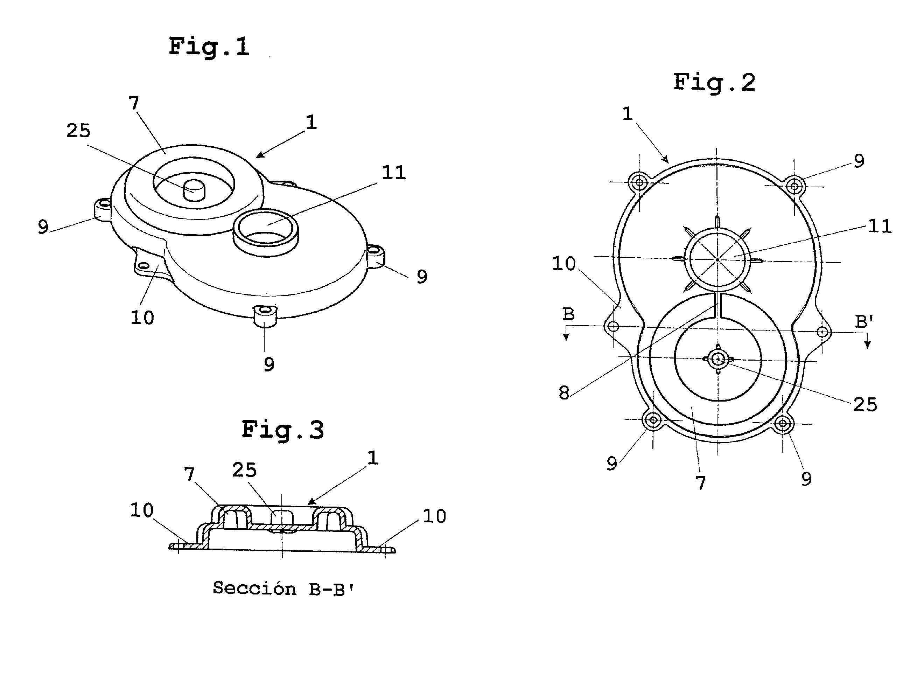

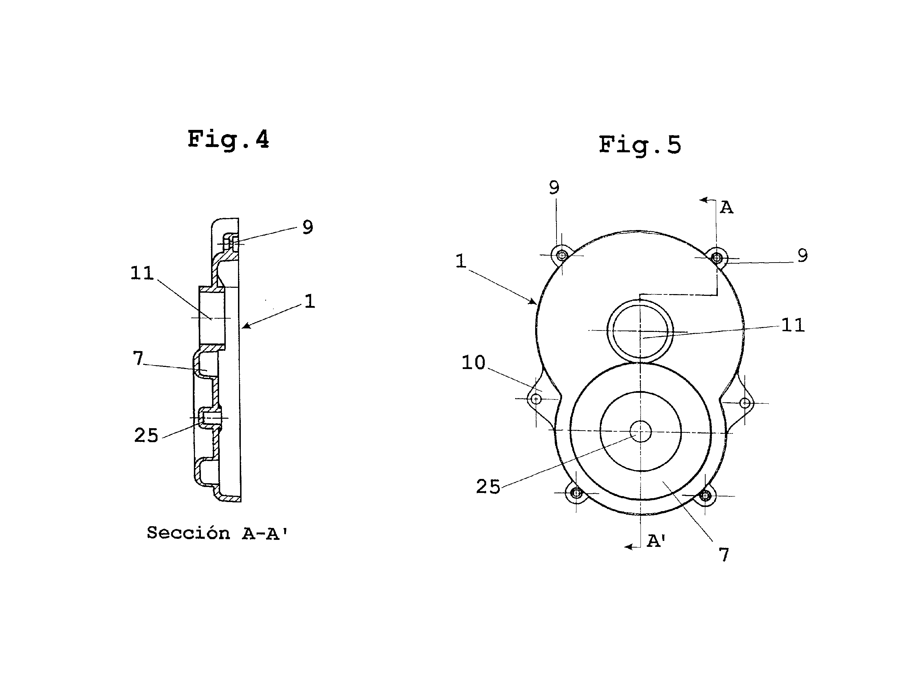

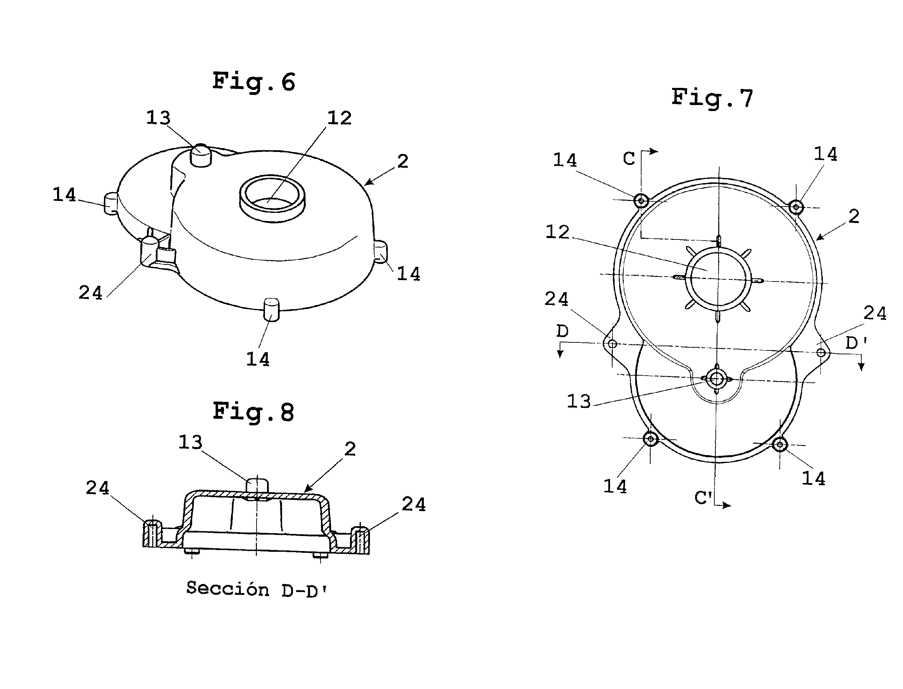

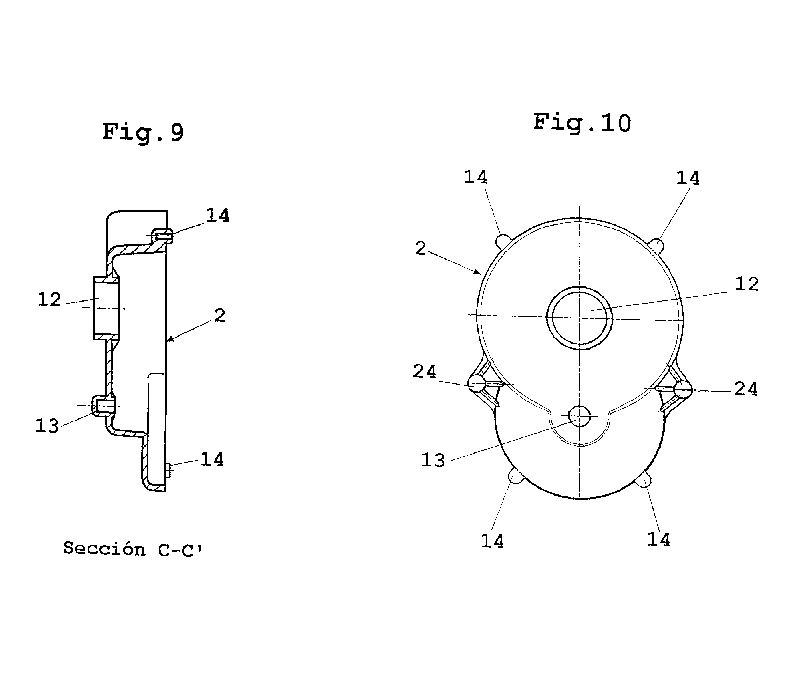

The mentioned box is composed of a base -2- and a lid -1-, assembled by means of various screws placed on stubs -9- and -14- arranged in a perimetric way for this purpose. It adopts the shape of a cylindrical sector with a certain thickness in secant with another cylindrical diameter of an inferior diameter and less thickness, giving the box a floor in the shape of an eight, as can be seen in figures 1 to 5 as regards the lid -1-and in figures 6 to 10 as regards the base -2-.

It also has a pair of stubs -10- and -24- at the intersection of both cylindrical sectors, acting as vanes with reinforcements to attach the steering spring to the vehicle by means of screws of similar.

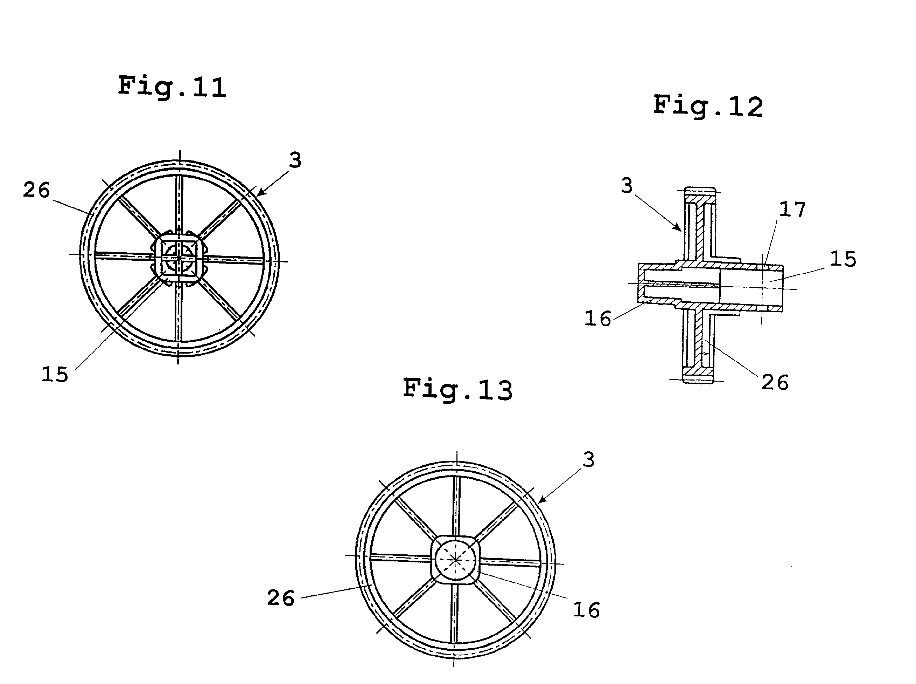

The box houses on the part formed by the cylindrical sector with a larger diameter the cogged crown -26- of the steering gears -3-, the hollow quadrangular section axle -15- of which project through the orifice -12- of the base -2- of the box. It is provided with internal radial reinforcements and an external surrounding projection and is coupled to the steering axis of the child's vehicle by means of two drill holes -17- made on both its sides (Figures 11 to 13).

The opposite circular section axle -16- of the mentioned steering fears -3- is coupled to the steering pinion -4- by its lower part being inserted into the equally circular section pinion -18- hole.

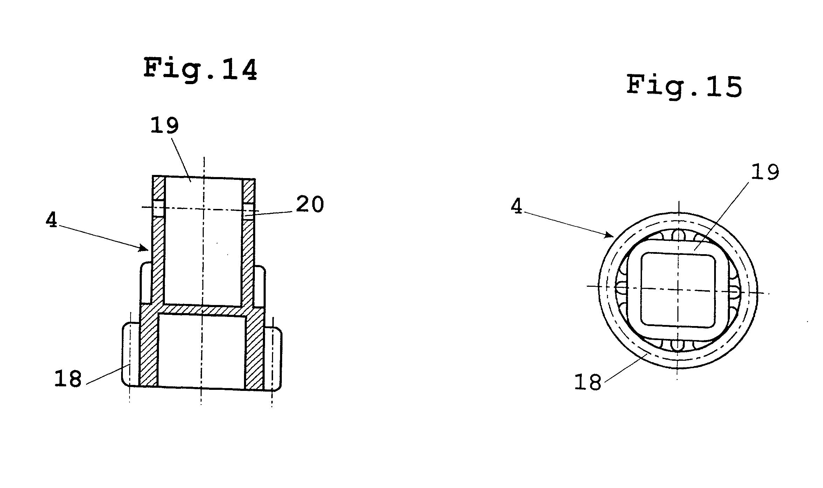

This steering pinion -14- pierces the lid -1- of the box through the orifice -11- provided with internal radial reinforcements and a surrounding projection, which the box in turn has on the central part of the larger diameter circumference shaping its floor, to be coupled to the steering axis of the child's vehicle by means of two drill holes -20-, thus transmitting the movement (figures 14 and 15).

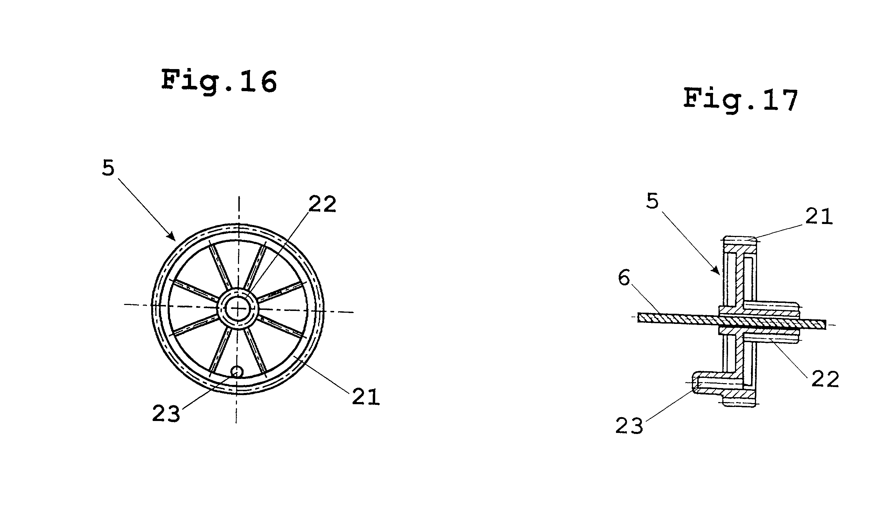

This movement of the steering wheel to the steering wheel pinion -4- is transmitted by the pinion -18- to the cogged section -21- of the intermediate gear -5-, provided with radial reinforcements the pinion -22- of which is integral with it and housed in a semi-circular section protuberance seen on the base -2- of the box. Its center coincides with that of the smaller diameter cylindrical sector that has the same thickness as the larger diameter cylindrical sector. In turn it is transmitted, already reduced, to the steering gear -3- that will make the steering axle of the vehicle turn and, therefore, its wheels. Said intermediate gear -5- is housed in the smaller diameter cylindrical sector shaping the form of the box and attached to it by the axle -6- that fits on to the base -2- of the box in the projection -13- and on the lid -1- in the projection -25-. This intermediate gear -5- also has, on its lower part and integral with the cogged crown -21-, a pivot -23- that moves on being turned through the annular opening -7- of the lid -1-divided by a partition -8- marking the end of the steering wheel turn towards one side or the other (figures 16 and 17).

## Claims

1. STEERING SPRING FOR CHILDREN'S VEHICLES, **characterized by** the fact that it is basically constituted by a mechanism composed of a steering gear (3), a steering wheel pinion (4) and an intermediate gear(5), which are assembled in a simple way, housed in a box formed by a base (2) and a lid (1), arranged so that reduction in the revolutions transmitted to the steering axle of the steering wheel of a child's vehicle is permitted. Thus, the front wheels simply turn an eighth, giving the vehicle a sensation of realism when driving it.

2. STEERING SPRING FOR CHILDREN'S VEHICLES, according to claim 1, **characterized by** the fact that the box enclosing the mechanism is composed of a base (2) and a lid (1) assembled by means of screws placed on two stubs (9) and (14) arranged in a perimetric way. It adopts the shape of a cylindrical sector with a certain thickness in secant with another cylindrical diameter of an inferior diameter and less thickness. It also has at the intersection of both cylindrical sectors, in the form of vanes, another pair of stubs (10) and (24) with reinforcements for securing, by means of screws or similar, the steering spring to the child's vehicle.

3. STEERING SPRING FOR CHILDREN'S VEHICLES, according to claims 1 and 2, **characterized by** the fact that the box houses, on the part formed by the cylindrical sector with the larger diameter, the cogged crown (26) of the steering gear (3), the quadrangular section axle (15) of which projects our of the orifice (12) of the base (2) and is coupled to the steering axle of the child's vehicle by means of two drill holes (7) made on both of its sides. Furthermore, the opposite axle (16) of a circular section is coupled to the pinion of the steering wheel (4) through its lower part inserted into the space of the pinion (19), which is also of a circular section. Also the pinion of the steering wheel (4) pierces the lid (1) of the box of the orifice (1) to be coupled to the axle of the steering wheel of the child's vehicle by means of drill holes (20).

4. STEERING SPRING FOR CHILDREN'S VEHICLES, according to claims 1 to 3, **characterized by** the fact that the movements of the child's vehicle steering wheel to the steering wheel pinion (4) is transmitted by the pinion (18) to the cogged crown (21) of the intermediate gear (5), the pinion (2) of which is integral with the latter and housed in a semi-circular section protuberance that can be seen on the base (2) of the box. In turn, it is transmitted, already reduced, to the steering gear (3), thus making the steering axle of the vehicle to turn.

5. STEERING SPRING FOR CHILDREN'S VEHICLES, according to claims 1 to 4, **characterized by** the fact that the intermediate gear (5) is housed in the smaller diameter cylindrical sector that shapes the form of the box and is secured to it by means of the axle (6) that fits on to the base (2) of the box in the projection (1) and on to the lid (1) in the projection (15). Furthermore, the intermediate gear (5) has, on its lower part and integral with the cogged crown (21), a pivot (23) that moves on being turned through the annular opening (7) of the lid (1) that is divided by a partition (8) marking the end of the steering wheel turn towards one side or the other.
